Europäisches Patentamt

European Patent Office

Office européen des brevets

(11) Publication number: **0 086 618**
**B1**

(12)

# EUROPEAN PATENT SPECIFICATION

(45) Date of publication of patent specification: **27.01.88**

(51) Int. Cl.⁴: **G 01 C 17/12,** G 01 C 17/22

(21) Application number: **83300613.3**

(22) Date of filing: **08.02.83**

(54) Improvements relating to compasses.

(30) Priority: **12.02.82 GB 8204181**

(43) Date of publication of application:
**24.08.83 Bulletin 83/34**

(45) Publication of the grant of the patent:
**27.01.88 Bulletin 88/04**

(84) Designated Contracting States:
**AT CH DE FR IT LI NL SE**

(56) References cited:
**FR-A- 470 809**
**FR-A- 736 237**
**FR-A- 764 855**
**FR-A- 1 263 981**
**GB-A- 1 109 172**

(73) Proprietor: **HALL & WATTS LIMITED**
**266 Hatfield Road**
**St. Albans Hertfordshire AL1 4UN (GB)**

(72) Inventor: **Saxby, Michael Ernest**
**The Hawthorns Norton Lea**
**Norton Lindsey Warwickshire (GB)**
Inventor: **Budden, Raymond George**
**Southerly 7 South Brook Road**
**Langston Havant Hampshire (GB)**
Inventor: **Scott, Fraser**
**Woodyers Wonersh**
**Guildford (GB)**

(74) Representative: **Yelland, William Alan et al**
**H.N. & W.S. SKERRETT Rutland House 148,**
**Edmund Street**
**Birmingham B3 2LQ (GB)**

Courier Press, Leamington Spa, England.

# Description

This invention concerns compasses generally of the kind comprising a housing, a rotatable member pivotally mounted in the housing for movement about a pivot point, direction seeking means to orientate the member to a given direction, optical means secured to the housing, and a compass scale which is provided on a wall or wall portion of the rotatable member; and wherein the optical means comprises a viewfinder of beam-splitting form, a lens device focused on the scale via a reflector to project an image of a portion of the scale to the viewfinder so that said image is focused at infinity and is reflected by the viewfinder so as to be superimposed upon light passing through the viewfinder.

Some considerable skill is needed to take accurate bearings using known compasses in order to minimise errors due to various causes, e.g. failure to align the compass properly with a distant object on which a bearing is to be taken, and failure to read the bearing from the exact centre of the image.

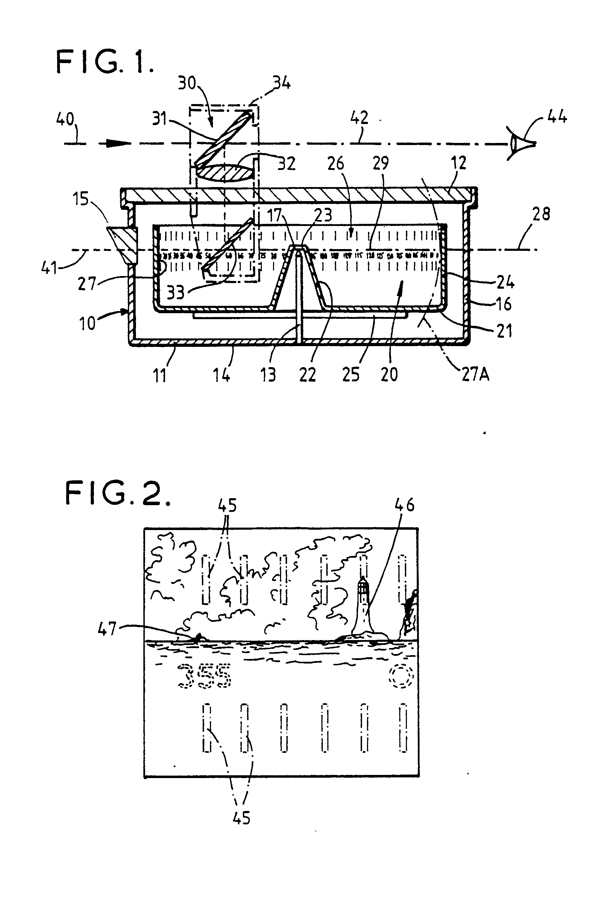

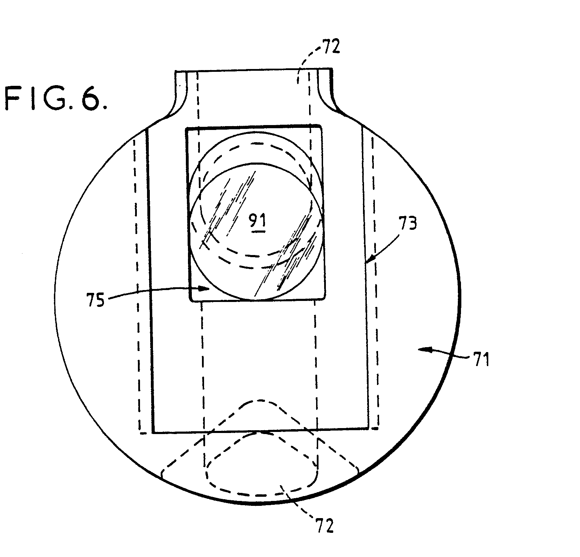

In British Patent Specification No. GB—A—1109172 there is proposed direction finding apparatus comprising a telescope or binoculars in combination with a compass, of which two forms are disclosed. The first of said forms of compass, shown in FIGURE 1, is of said kind and is similar to the form of compass shown in FIGURE 6 of FR—A—1263981, in which the lens and scale are nominally horizontal, the lens being disposed between the scale and the viewfinder. Such forms of compass have the major disadvantage that tilting of the compass varies the distance between the scale and the lens, thus moving the scale image out of focus.

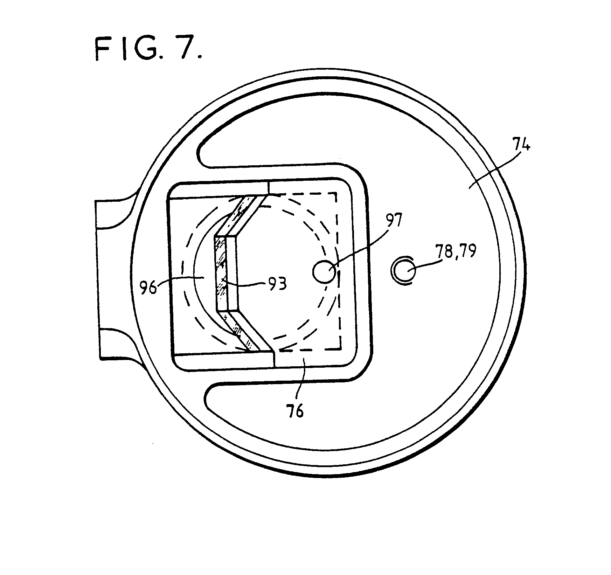

In FIGURE 7 of FR—A—1263981 there is shown a further form of compass, which is of said kind and is similar to the second form of compass shown in FIGURE 2 of GB—A—1109172, in that the scale is provided on an external peripheral surface of a nominally vertical wall of the rotatable member, there being a reflector spaced radially outwardly from the scale to reflect light from the scale upwards to the lens. These forms of compass have the disadvantage that the compass (and the telescope or binoculars) must be aligned with the distant object being viewed so that the latter is precisely central in the field of view and the bearing must be read from the centre of the scale image; and has other inherent disadvantages which can give rise to errors and diffulties, e.g. parallax errors, blurring of the scale image if the apparatus is not horizontal, and insufficient control of the contrast between the image in the field of view and the scale image.

Furthermore, known compasses of said kind can give rise to errors and the scale can be difficult to read even if the compass is aligned so that the distant object is central in the view, if the compass is not held in a horizontal plane, due to the housing and optical means being tilted relative to the rotatable member. Attempts have been made to minimise such errors by restricting the movement of the rotatable member to rotational movements about a predetermined axis which is fixed in relation to the housing, but such attempts have involved extra costs, and have introduced secondary disadvantages.

What is needed is a relatively easy to use compass.

According to the present invention there is provided a compass of said kind and characterised in that:—

(a) said compass scale faces towards said pivot point for viewing via the optical means;

(b) said reflector is disposed vertically below said lens device and projects angularly between said compass scale and said pivot point, so that the apparent position of the nodal point of the lens device, in respect of light from said portion of the scale, is located at said pivot point or is proximal to said pivot point.

The compass enables a user to take a bearing on an object in a distant view simply by looking at the view through the viewfinder and observing the position of the object on the image of the portion of the scale which is visible in the viewfinder. The need to align the compass with the horizontal and the need to centralise the object precisely in the field of view, are avoided.

Light is preferably directed to the scale from the field of view, from adjacent to the field of view from the sky above on or in line with the field of view; and said reflector is preferably disposed so as to intersect said nominally horizontal plane at an angle of about 45° at a line within said circle so as to be interposed between the scale and the pivot point. Said angle is preferably 45° but a small variation, e.g. of up to 5°, may be employed without incurring excessive distortion if the geometry of the scale and lens device is arranged to minimise distortion. The lens device or at least the scale proximal face thereof, said reflector and said scale are preferably immersed in liquid within the compass.

The invention will be described, by way of example, with reference to the accompanying diagrammatic drawings, wherein:—

FIGURE 1 is a vertical sectional view of a compass according to the invention;

FIGURE 2 is a diagram showing a view and image superimposed thereon as seen by a person using the compass;

FIGURE 3 is a vertical sectional view of a second embodiment of compass of the invention;

FIGURE 4 shows a vertical longitudinal part sectional view of a third embodiment of the invention;

FIGURE 5 shows a vertical transverse part sectional view of the third embodiment;

FIGURE 6 is a plan view of the underside of a top part of a housing of the third embodiment; and

FIGURE 7 is a plan view of the underside of an intermediate part of the housing.

Referring to FIGURE 1, the first embodiment of compass comprises a housing 10, a rotatable member 20, and optical means 30.

The housing 10 comprises a case 11 which is closed by a transparent lid 12. A central pivot needle 13 is secured so as to be perpendicular to the base 14 of the housing 10. A light collecting window 15 is provided in a cylindrical side wall 16 of the housing.

The rotatable member 20 comprises a circular bottom 21 having a raised central portion 22 providing an apex 23 seated on the needle 13 so that the member is rotatable about a pivot point 17; and comprises a peripheral wall 24 which is upstanding from the bottom 21. A magnet 25 or magnets are secured to the bottom 21.

In this first embodiment the walls 16 and 24 are cylindrical.

A compass card is marked or provided on an upper surface of the bottom 21. A compass scale 26 is provided on a portion 27 of the wall 24, and is arranged so that said portion 27 intersects a nominally horizontal plane (indicated by a broken line 28) through the pivot point 17 at a circle 29 centred on the pivot point 17. The scale 26 is readable from that side of the portion 27 which confronts (faces towards) the pivot point 17.

The optical means 30 comprises a viewfinder 31, a lens device 32 and a reflector 33 which are supported by a mounting 34 secured to the lid 12.

In the embodiment shown the viewfinder 31 is of beamsplitting form and is represented as a transparent planar member of semi-reflective form having a face or surface which is partially silvered with a suitable deposited metal, e.g. a multiplicity of discrete chromium deposits, but said planar member may be of a selectively reflective form having a face or surface which is dichroic, i.e. which reflects light of a specific wave length and is transparent to light of other wavelengths.

The lens device 32 is represented by a biconvex lens, but may be of other form such as a planoconvex lens or a more complex multielement lens or lens array. The reflector 33 is represented by a mirror, but may be a reflector prism.

The reflector 33, or reflective face thereof, is centred in the plane 28 at 45° to the plane, is vertically below the lens device 32, is parallel with the viewfinder 31 or semi-reflective face thereof, and is positioned between the portion 27 and the pivot point 17.

The lens device 32 has an effective focal length which is equal to the radius of said portion 27, and the lens device is positioned so as to be focused on said portion 27 via the reflector. If the case 11 is liquid filled for damping, the refractive index of the liquid is taken into account when determining the back focal length and the positioning of the lens device so that the latter is focused on said portion 27.

The arrangement of the reflector 33 and lens device 32 is such that, with respect to the portion 27, the apparent position of the nodal point centre of the lens coincides with the pivot point 17, so that the lens projects an image of that part or portion of the scale 26 which confronts the reflector 33 to or into the viewfinder, said image being focused at infinity. In this embodiment the wall 24 is of a transparent material, the scale 26 being represented by transparent characters on an opaque background.

The viewfinder 31 receives light from a view confronting the viewfinder along a path centred on the broken line 40, a portion of which light passes through the viewfinder, and the viewfinder also reflects a portion of the light from the window 15, which light travels along a path centred on the dotted line 41, so that said portions of light are combined and follow a path centred on the chain broken line 42 from the viewfinder for observation by an eye 44 of a user of the compass, who will observe the scale as bright or coloured characters superimposed clearly upon the view, as indicated in FIGURE 2 in which the characters are shown in broken lines and comprise numerals and two spaced apart horizontal rows of striations 45 which represent actual degrees.

When the compass is horizontal a distant horizon will be central between the rows. However, if the compass is tilted slightly in any direction the card will remain horizontal, and the characters will continue to indicate accurate bearings in relation to the horizon and will remain sharply defined whilst visible in the viewfinder.

The compass affords a direct reading of the bearing, and can be used to give comparative simultaneous bearings of a plurality of objects in a given view in the viewfinder, e.g. the lighthouse 46 and the rock 47 which are about four degrees apart, the rock having a bearing of about 355°.

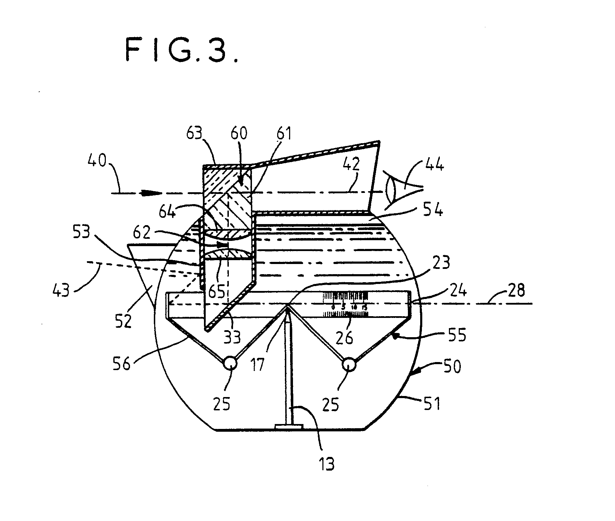

The second embodiment of compass shown in FIGURE 3 also comprises a housing 50, a rotatable member 55, and optical means 60.

The housing 50 comprises a substantially spherical case 51 in which a nominally perpendicular central pivot point needle 13 is secured so as to extend upwards to near to the centre of the housing. A light collecting window 52 is provided in the wall of the housing.

The rotatable member 55 comprises a spider carrier 56 having a raised central portion providing an apex 23 seated on the needle 13 so that the member is rotatable about a pivot point 17; and comprises a cylindrical peripheral wall 24 which is upstanding from the carrier 56. Parallel magnets 25 are secured to the bottom parts of the carrier.

A compass scale 26 is provided on the wall 24, and is arranged so that said wall intersects the nominally horizontal plane 28 through the pivot point 17 at a circle centred on the pivot point 17.

The optical means 60 comprises a viewfinder 61, a lens device 62 and a mirror reflector 33 which are supported by a mounting 63 which serves as a closure for an upper opening in the housing 50.

In the second embodiment, the viewfinder 61 is represented as a dichroic prism cube member, but a semi-reflective prism member may be substituted, and is of beam-splitting form.

The lens device 62 comprises two plano-convex lenses 64 and 65. The upper lens 64 abuts the prism member.

The reflector 33 is arranged in the same manner as in the first embodiment and is parallel with the reflective dichroic face of the viewfinder 61.

The lens device 62 has an effective focal length which is equal to the radius of said wall 24, and is positioned so as to be focused on said wall 24 via the reflector. The case 11 is liquid filled, and the refractive index of the liquid is also taken into account when determining the back focal length of the lens device, to give the correct optical distance between the bottom lens 65 and said wall 24 via said reflector 33.

The arrangement of the reflector 33 and lens device 32 is such that, with respect to the wall 24, the apparent position of the relevant nodal point of the lens device coincides with the pivot point 17, so that the lens projects an image of that arcuate part or portion of the scale 26 which confronts the reflector 33 to or into the viewfinder, said image being focused at infinity. In this embodiment the wall 24 is of an opaque material, the scale 26 being represented by painted fluorescent characters on an opaque background.

The window 52 is disposed above the level of the wall 24 and a front face 53 of the mounting 63 is silvered to reflect light from the window onto the scale 26 in line with the field of view through the viewfinder.

The viewfinder 61 receives light, from the view confronting the viewfinder, along a path centred on the broken line 40, a portion of which light passes through the viewfinder, and the viewfinder also reflects a portion of the light from the window 52, which light travels along a path centred on the dotted line 43, so that said portions of light are combined and follow a path centred on the chain broken line 42 from the viewfinder for observation by an eye 44 of a user of the compass, who will observe the scale as coloured bright characters superimposed clearly upon the view, as indicated in FIGURE 2.

The use of a spider carrier reduces coupling between the liquid and the carrier, and the immersion of the lower face of the bottom lens 65 in the liquid enables an expansion space 54 to be left in the top of the housing 50.

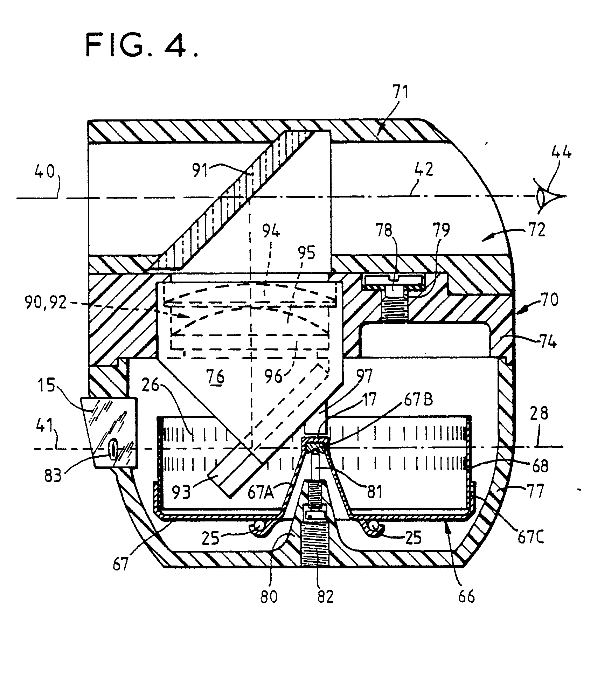

The third embodiment of compass shown in FIGURES 4 to 7 comprises a rotatable member 66, a housing 70, and optical means 90.

The housing 70 includes a moulded opaque plastics top part 71 which serves as a mounting for a viewfinder 91 of the optical means and defines a sighting passage 72 of circular cross section. The underside 73 (FIGURE 6) of the top part 71 interlocks with a moulded opaque intermediate part 74 of the housing 70, and has a bottom opening 75 below the viewfinder 91 and above a lens device 92 of the optical means 90.

The intermediate part 74 incorporates a hollow mounting 76. The lens device 92 is mounted in the mounting 76 and a reflector 93 is mounted at the bottom of the mounting 76. The intermediate part 74 is bonded to and serves as a closure for a lower case part 77 of the housing, and is provided with a screw plug 78 to close a filler opening 79 via which liquid can be inserted into the case part 77 when the top part 71 and plug 78 are removed.

The lower case part 77 is dished and provides a central mounting 80 for a screw in pivot needle 81 and a threaded socket 82 for insertion of a needle retaining plug or a fastener for securing the housing to a support or handle. A light collecting window 15 is secured in the wall of the case part 77. A beta-light 83 is provided at the window.

The rotatable member 66 comprises a moulded or cast bottom portion 67 icnorporating a raised central portion 67A in which a jewel bearing 67B is seated to rest on the needle 81, and a peripheral flange 67C which supports a separately formed cylindrical transparent wall portion 68 on which the scale 26 is marked by transparent characters on an opaque background, as described hereinbefore with reference to FIGURE 1. Two magnets 25 are carried by the bottom portion 67.

The lens device 92 comprises an upper planoconvex lens 94 and a lower plano-convex lens 95 separated by a small gap. The combined lenses have an effective focal length which is approximately equal to the radial distance between the scale 26 and the pivot point 17 when the case is filled with liquid. The lenses 94 and 95 are arranged in relation to the reflector 93 so that the distance travelled by the light from the scale to the flat undersurface 96 of the lens 95 via the reflector 93 is substantially equal to the appropriate back focal length of the combined lenses 94 and 95 in the liquid chosen to fill the compass case; and the nodal point of the lens device for such light is effectively at a physical distance (measured along the light path from the scale) which is substantially equal to said radial distance multiplied by the refractive index of the chosen liquid. Optically, this embodiment provides for the user of a functional equivalent of the first embodiment with respect to the light paths 40, 41 and 42, except in that the eye visible to the viewer's eye 44 is circular instead of being rectangular as shown in FIGURE 2. The lens device is similarly focused on the scale to give a clear image in real degrees focused at infinity.

In use, unwanted vertical movements of the rotatable member 66 are restricted by a stop 97 which extends from the hollow mounting 76 to close to the top of the central portion 67A.

The invention is not confined to the precise details of the foregoing examples, and many variations are possible within the scope of the invention as defined by the appended claims. For example, in the first embodiment the compass card may be omitted and the lid may be opaque, and shaped to serve as an integral mounting for the elements of the optical means.

In the second embodiment the paint for the characters is selected to transmit light of the wavelength reflected by the beamsplitter, but the window 52 may be replaced by the window 15 and transparent characters employed in the wall 24 as in the first embodiment.

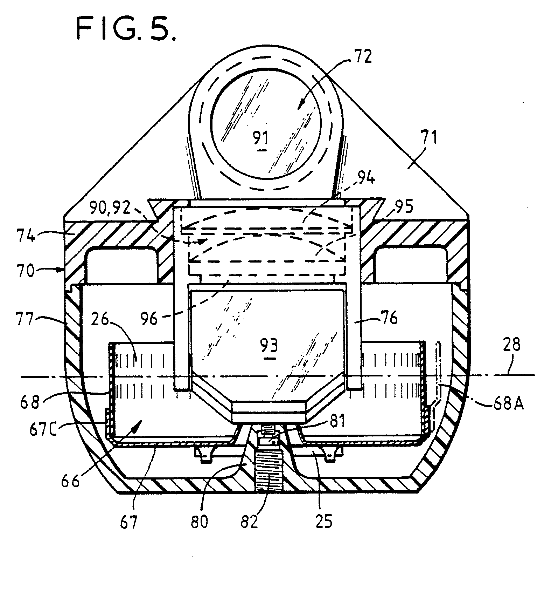

The wall 24 or the portion 27 may be upwardly curved about an arc 27A centred on the pivot point as indicated in broken lines in FIGURE 1; and the wall portion 68 may be shaped and radially enlarged as indicated in broken lines as 68A in FIGURE 5.

The lens device may comprise lenses or a compound lens or lenses, and such embodiments are arranged so that the effective focal length of the lens device is substantially equal to the radius of the scale from the pivot point, and so that the apparent position of that nodal point which is effective for the portion of light from the scale reflected by the viewfinder is disposed at or near the pivot point, after taking into account the refractive index of any liquid used for filling the case.

A beta-light or other artificial light source may be provided, e.g. in the window 15 or 52, to provide light for using the compass at night, or a light source could be substituted in place of the windows.

A gyroscopic device may be used as an alternative to a magnet or magnets as a suitable direction seeking means for orientating the rotatable member.

## Claims

1. A compass comprising a housing (10; 50; 70), a rotatable member (20; 55; 66) pivotally mounted in the housing for movement about a pivot point (17), direction seeking means (25) to orientate the rotatable member to a given direction, optical means (30; 60; 90) secured to the housing, and a compass scale (26) which is provided on a wall or wall portion (24; 27; 68; 68A) of the rotatable member; and wherein the optical means (30; 60; 90) comprises a viewfinder (31; 61; 91) of beamsplitting form, a lens device (32; 62; 92) focused on the scale via a reflector (33; 93) to project an image of a portion of the scale to the viewfinder so that said image is focused at infinity and is reflected by the viewfinder so as to be superimposed upon light passing through the viewfinder; and characterised in that:—

(a) said compass scale (26) faces towards said pivot point (17) for viewing via the optical means; and

(b) said reflector (33; 93) is disposed vertically below said lens device (32; 62; 92) and projects angularly between said compass scale (26) and said pivot point (17), so that the apparent position of the nodal point of the lens device, in respect of light from said portion of the scale, is located at said pivot point (17) or is proximal to said pivot point (17).

2. A compass as claimed in Claim 1 characterised in that the lens device (32; 62; 92) has an effective focal length substantially equal to the radius of the scale (26); in that the said reflector (33; 93) is disposed so as to intersect, at an angle of about 45°, a nominally horizontal plane (28) passing through the scale (26) and the pivot point (17), and in that a reflective or partially reflective face of the viewfinder (31; 61; 91) is parallel with a reflective face of the reflector (33; 93).

3. A compass as claimed in Claim 1 or 2, characterised in that the housing (10; 50; 70) comprises a top part (71) supporting the viewfinder (91), an intermediate part (74) supporting the reflector (93) and lens device (92), and a lower part (77) supporting an adjustable pivot (81); and in that the top part (71) is releasably connected to the intermediate part (74), and the latter is fixedly joined to the lower part (77).

4. A compass as claimed in any preceding claim, characterised in that said wall or wall portion (24; 27; 68; 68A) is at least partially transparent, and light is directed to the scale from the field of view, from adjacent to the field of view or in line with the field of view.

5. A compass as claimed in any one of Claims 1 to 3 characterised in that said wall or wall portion (24; 27; 68; 68A) is opaque, and light, from adjacent to the field of view or in line with the field of view, is reflected within the compass onto said portion of the scale.

6. A compass as claimed in Claim 4 or 5 wherein said light, from adjacent to the field of view from the sky above or or in line with the field of view, passes through a window (15; 52) in the housing, and wherein a beta-light (83) is provided in said window.

7. A compass as claimed in any preceding claim, characterised in that a scale-proximal face of the lens device (32; 62; 92), said reflector (33; 93) and said rotatable member (20; 55; 66) are immersed in liquid within the housing (10; 50; 70).

8. A compass as claimed in any preceding claim and characterised in that the wall or wall portion (24; 27; 68; 68A) is upwardly curved about an arc (27A) centred on the pivot point (17).

## Patentansprüche

1. Kompaß, der ein Gehäuse (10; 50; 70), ein Drehglied (20; 55; 66), das in dem Gehäuse schwenkbar zu einer Bewegung um einen Drehpunkt (17) gelagert ist, ein Richtungssuchelement (25), um das Drehglied in einer bestimmten Richtung auszurichten, eine an dem Gehäuse angebrachte optische Einrichtung (30; 60; 90) und eine Kompaß-Skala (26) aufweist, die an einer Wand oder einem Wandabschnitt (24; 27; 68; 68A) des Drehgliedes angeordnet ist, wobei die optische Einrichtung (30; 60; 90) einen strahlteilenden Sucher (31; 61; 91) und ein über einen Reflektor (33; 93) auf die Skala fokussiertes Linsensystem (32; 62; 92) umfaßt, um eine Abbildung eines Abschnittes der Skala auf den Sucher zu projezieren, so daß diese Abbildung ins Unendliche fokussiert und durch den Sucher reflektiert wird, um dem durch den Sucher hindurchtretenden Licht überlagert zu werden, dadurch gekennzeichnet, daß

a) die Kompaß-Skala (26) zu dem Drehpunkt (17) hingerichtet ist, um über die optische Einrichtung sichtbar zu werden, und

b) der Reflektor (33; 93) vertikal unterhalb des Linsensystems (32; 62; 92) angeordnet und zwischen der Kompaß-Skala (26) und dem Drehpunkt (17) schräggestellt angebracht ist, so daß die scheinbare Position des Knotenpunktes des Linsensystems im Hinblick auf das Licht von dem genannten Abschnitt der Skala in dem Drehpunkt (17) oder in unmittelbarer Nähe dieses Drehpunktes (17) liegt.

2. Kompaß nach Anspruch 1, dadurch gekennzeichnet, daß das Linsensystem (32; 62; 92) eine effektive Brennweite hat, die im wesentlichen gleich dem Radius der Skala (26) ist, daß der Reflektor (33; 93) so angeordnet ist, daß er unter einem Winkel von etwa 45° eine nominell horizontale Ebene (28) schneidet, die durch die Skala (26) und den Drehpunkt (17) gelegt ist, und daß eine reflektierende oder teilreflektierende Fläche des Suchers (31; 61; 91) parallel zu einer reflektierenden Fläche des Reflektors (33; 93) liegt.

3. Kompaß nach Anspruch 1 oder 2, dadurch gekennzeichnet, daß das Gehäuse (10; 50; 70) ein den Sucher (91) tragendes Oberteil (71), ein den Reflektor (93) und das Linsensystem (92) aufnehmendes Zwischenteil (74) und ein Unterteil (77) aufweist, das einen verstellbaren Drehzapfen (81) aufnimmt, und daß das Oberteil (71) lösbar an dem Zwischenteil (74) befestigt ist, während dieses fest mit dem Unterteil (77) verbunden ist.

4. Kompaß nach einem der vorhergehenden Ansprüche, dadurch gekennzeichnet, daß die Wand oder der Wandabschnitt (24; 27; 68; 68A) zumindest teilweise transparent ist, und daß auf die Skala Licht von dem Beobachtungsfeld, von der Umgebund des Beobachtungsfeldes oder ausgerichtet mit dem Beobachtungsfeld gerichtet wird.

5. Kompaß nach einem der Ansprüche 1 bis 3, dadurch gekennzeichnet, daß die Wand oder der Wandabschnitt (24; 27; 68; 68A) opak ist, und daß Licht aus der Umgebung des Beobachtungsfeldes oder ausgerichtet mit dem Beobachtungsfeld innerhalb des Kompasses auf den genannten Abschnitt der Skala reflektiert wird.

6. Kompaß nach Anspruch 4 oder 5, bei dem das Licht aus der Umgebung des Beobachtungsfeldes oder von dem Himmel oberhalb des Beobachtungsfeldes oder ausgerichtet mit dem Beobachtungsfeld durch ein Fenster (15; 52) in dem Gehäuse hindurchtritt, und daß in dem Fenster eine zusätzliche Lichtquelle (83) angeordnet ist.

7. Kompaß nach einem der vorhergehenden Ansprüche dadurch gekennzeichnet, daß eine skalenzugewandte Fläche des Linsensystems (31; 62; 92), der Reflektor (33; 93) und das Drehglied (20; 55; 66) innerhalb des Gehäuses (10; 50; 70) in Flüssigkeit eingetaucht sind.

8. Kompaß nach einem der vorhergehenden Ansprüche, dadurch gekennzeichnet, daß die Wand oder der Wandabschnitt (24; 27; 68; 68A) nach oben hin entlang eines Bogens (27A) gekrümmt ist, dessen Mittelpunkt im Drehpunkt (17) liegt.

## Revendications

1. Compas comprenant un boîtier (10; 50; 70), un organe tournant (20; 55; 66), monté pivotant dans le boîtier de manière à se mouvoir autour d'une pointe de pivot (17), des moyens de recherche de direction (25) pour orienter l'organe dans une direction donnée, des moyens optiques (30; 60; 90) fixés au boîtier et une graduation de compas (26) qui est disposée sur une paroi ou une partie de paroi (24; 27; 68; 68A) de l'organe tournant, les moyens optiques (30; 60; 90) comprenant un viseur (31; 61; 91) du type à fractionnement des rayons, un système de lentille (32; 62; 92) focalisé sur la graduation par l'intermédiaire d'un réflecteur (33; 93) pour projeter une image d'une partie de la graduation sur le viseur, de telle manière que cette image soit focalisée à l'infini et qu'elle soit superposée à la lumière qui passe à travers le viseur, caractérisé en ce que:

(a) la graduation de compas (26) fait face en direction de la pointe de pivot (17) pour être observée à travers les moyens optiques;

(b) le réflecteur (33; 93) est disposé au-dessous du système de lentille (32; 62; 92) en direction verticale et il fait saillie en position angulaire entre la graduation de compas (26) et la pointe de pivot (17), de telle manière que la position apparente du point nodal du système de lentille, par rapport à la lumière provenant de ladite partie de la graduation, soit située à la pointe de pivot (17) ou soit proche de la pointe de pivot (17).

2. Compas selon la revendication 1, caractérisé en ce que le système de lentille (32; 62; 92) a une distance focale effective qui est sensiblement égale au rayon de la graduation (26), en ce que le réflecteur (33; 93) est disposé de manière à couper, sous un angle d'environ 45°, un plan normalement horizontal (28) passant par la graduation (26) et par la pointe de pivot (17), et en ce qu'une face réfléchissante ou partiellement réfléchissante du viseur (31; 61; 91) est parallèle à une surface réfléchissante du réflecteur (33; 93).

3. Compas selon la revendication 1 ou 2, caractérisé en ce que le boîtier (10; 50; 70) comprend une partie supérieure (71) supportant le viseur (91), une partie intermédiaire (74) supportant le réflecteur (93) et le système de lentille (92), et une partie inférieure (77) supportant un pivot réglable (81), et en ce que la partie supérieure (71) est fixée de façon détachable à la partie intermédiaire (74) et cette dernière est raccordée de façon inamovible à la partie inférieure (77).

4. Compas selon l'une quelconque des revendications 1 à 3, caractérisé en ce que ladite paroi ou partie de paroi (24; 27; 68; 68A) est au moins partiellement transparente et en ce que de la lumière est dirigée vers la graduation à partir du champ visuel, à partir du voisinage du champ visuel ou à partir de l'alignement du champ visuel.

5. Compas selon l'une quelconque des revendications 1 à 3, caractérisé en ce que ladite paroi ou partie de paroi (24; 27; 68; 68A) est opaque et en ce que de la lumière provenant du voisinage du champ visuel ou de l'alignement du champ visuel est réfléchie dans le compas sur ladite partie de la graduation.

6. Compas selon la revendication 4 ou 5, caractérisé en ce que ladite lumière provenant du voisinage du champ visuel ou du ciel au-dessus ou dans l'alignement du champ visuel passe à travers une fenêtre (15; 52) formée dans le boîtier, et en ce qu'une lampe bêta (83) est prévue dans cette fenêtre.

7. Compas selon l'une quelconque des revendications 1 à 6, caractérisé en ce qu'une face du système de lentille (32; 62; 92) proximale par rapport à la graduation, le réflecteur (33; 93) et l'organe tournant (20; 55; 66) sont immergés dans un liquide à l'intérieur du boîtier (10; 50; 70).

8. Compas selon l'une quelconque des revendications 1 à 7, caractérisé en ce que la paroi ou partie de paroi (24; 27; 68; 68A) est courbée vers le haut selon un arc (27A) centré sur la pointe de pivot (17).

# FIG. 1.

# FIG. 2.

# FIG.3.

# FIG. 4.

# FIG. 5.

FIG.6.

FIG. 7.